# EUROPEAN PATENT SPECIFICATION

(11) **EP 1 905 537 B1**
(45) Date of publication and mention of the grant of the patent: **08.06.2011**
(21) Application number: 07018895.8
(22) Date of filing: 26.09.2007
(51) Int. Cl.: B23Q 7/04, B23Q 39/02

(54) **Station for mechanical machining of parts comprising a robotic arm**
Station zur mechanischen Bearbeitung von Teilen umfassend einen Roboterarm
Station pour l'usinage mécanique de pièces comprenant un bras de robot

(30) Priority: 26.09.2006 IT MO20060291
(43) Date of publication of application: 02.04.2008
(73) Proprietor: SIR S.P.A., 41122 Modena (IT)
(72) Inventor: Passoni, Luciano, 41051 Castelnuovo Rangone (MO) (IT)
(74) Representative: Brunacci, Marco

(56) References cited:
- EP-A1- 1 935 564
- WO-A-97/10071
- CH-A5- 658 216
- US-A- 5 056 964

## Description

The present invention relates to a station for mechanical machining of parts, particularly cast iron, aluminium castings or the like according to the preamble of claim 1 (see, for example, US-5056964).

It is common knowledge that, in numerous industrial sectors, robotised stations are being used increasingly often which enable various operations to be carried out without the direct intervention of human operators.

In the sector of foundry forging of both heavy and light alloys, for example, robotised stations are widely used for deburring castings, cutting sprues and more.

These stations are usually composed of a cabin, a fence or the like inside which an articulated robotic arm is housed, generally with six or more axes and capable of handling the parts to be machined.

Inside conventional stations there are also numerous operating units equipped with various tools for carrying out different types of machining on the parts.

The operating units, such as milling machines, grinders, sawing machines, taping machines etc., are usually fastened to the ground around the robotic arm and positioned inside the range of action of the robotic arm, range of action meaning the area of space that the free end of the robotic arm used for gripping the parts to be machined can reach.

The robotic arm basically grasps the parts, orientates them in the space depending on the type of machining to be carried out and then brings them into contact with the tools of the operating units.

Furthermore, close to each operating unit there is usually a suction system which enables the dust and microscopic off-cuts produced during machining to be collected and removed.

Should the machining carried out by the operating unit result in the formation of bulkier waste, such as that caused by cutting sprues, the operating unit is usually connected to an automated line for removing the waste.

Such stations of the known type do have a number of drawbacks.

In fact, the presence of a number of operating units around the robotic arm is rather awkward inside the machining station and it is often sufficient to limit the mobility of the robotic arm and thus cause significant difficulty in programming its movements.

The complex and expensive suction systems which, inconveniently, have to be installed practically everywhere near each operating unit also add to the overall dimensions inside the machining station.

It should not be forgotten that the need to position some operating units to work together with one or more lines for removing the waste significantly complicates the layout of the known types of stations.

Moreover, it is highlighted that further obstructions, movement difficulties and plant-engineering complexities of the machining stations also result from the presence of numerous electrical and pneumatic wirings which must supply power to all of the operating units present.

It is also highlighted that the installation and removal of the operating units in general is not very practical and takes a significant amount of time to carry out.

The main aim of the present invention is to provide a station for the mechanical machining of parts, particularly cast iron, aluminium castings or the like, which has limited overall dimensions and is easy to program and use.

A further object of the present invention is to have significantly simple operation and structure, especially as regards the need to remove waste, off-cuts and dust and at the same time supply the operating units with electrical energy and compressed air.

Another object of the present invention is to allow installation and maintenance jobs to be carried out in a practical and straightforward manner, significantly increasing the flexibility of use compared to conventional machining stations.

Another object of the present invention is to provide a station which enables the drawbacks of the prior art mentioned to be overcome via a simple, rational solution with limited costs.

The objects described above are all achieved by the present station for mechanical machining of parts as defined in claim 1.

Further characteristics and advantages of the present invention will appear more evident from the detailed description of a preferred, but not exclusive, embodiment of a station for mechanical machining of parts, particularly cast iron, aluminium castings or the like, illustrated indicatively by way of non limiting example, in the attached drawings wherein:
Figure 1 is a plan view of the station according to the invention;

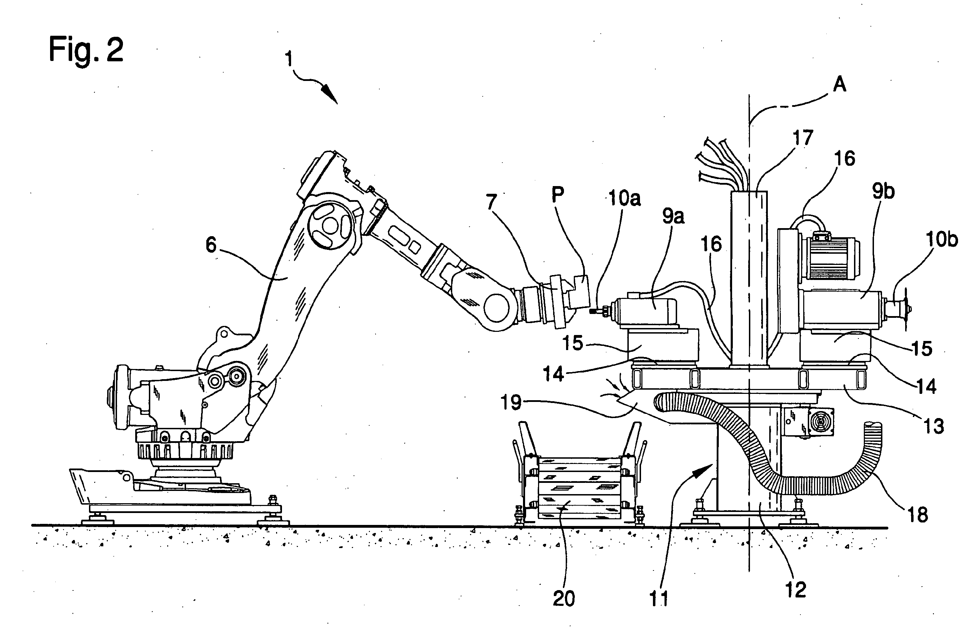

Figure 2 is raised side view of a portion of the station according to the invention;

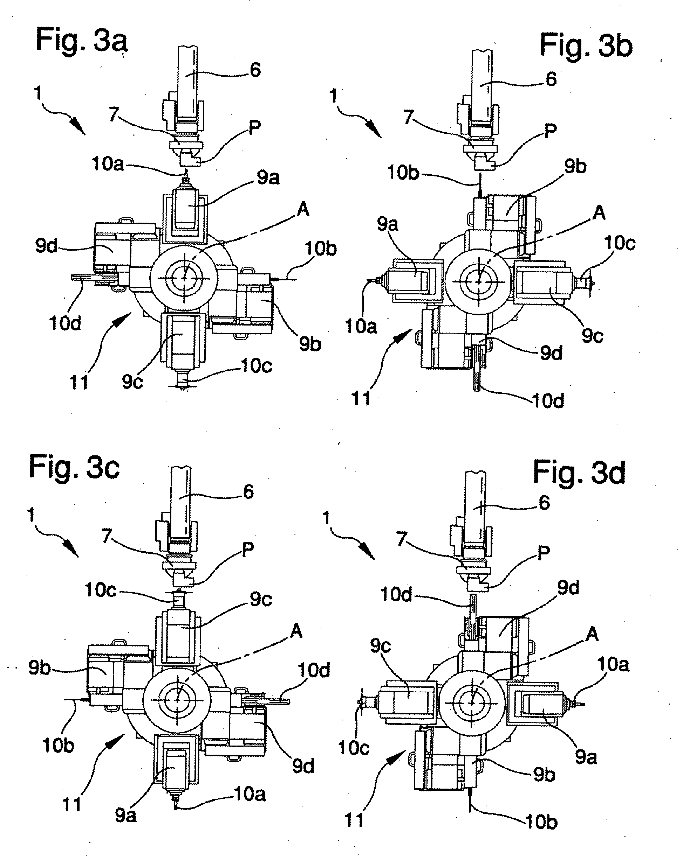

Figure 3a is a partial schematic plan view of the station according to the invention in which a first operating unit is placed in the working position;
Figure 3b is a partial schematic plan view of the station according to the invention in which a second operating unit is placed in the working position;
Figure 3c is a partial schematic plan view of the station according to the invention in which a third operating unit is placed in the working position;
Figure 3d is a partial schematic plan view of the station according to the invention in which a fourth operating unit is placed in the working position.

With particular reference to such figures, a station for mechanical machining of parts, particularly cast iron, aluminium castings or the like has been globally indicated by 1.

The station 1 comprises a work area 2 suitable for being inaccessible to the operators O in service during normal use.

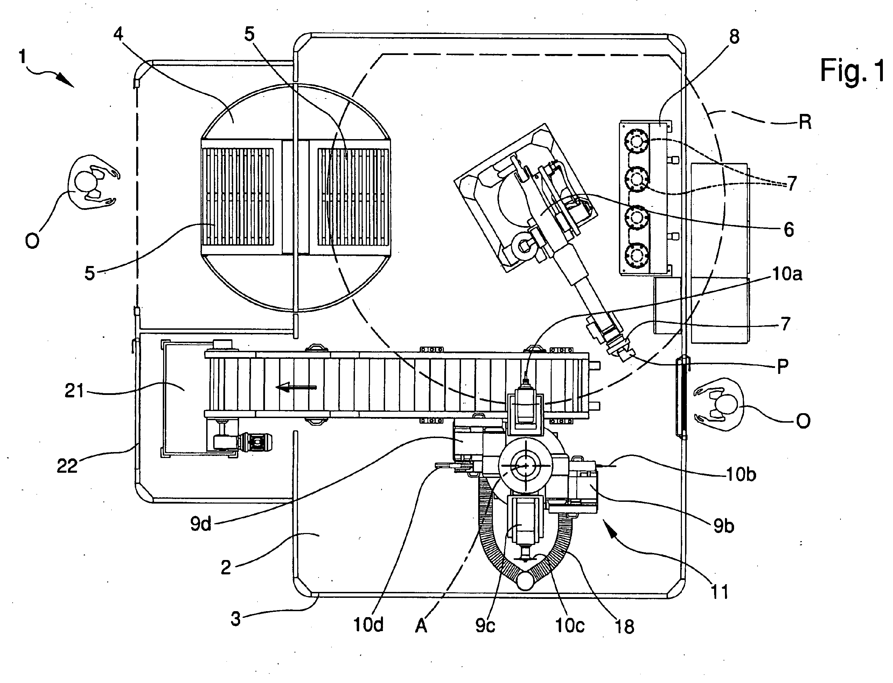

In the particular embodiment of the invention shown in figure 1, the work area 2 is defined by a soundproof cabin 3, more or less permeable to sounds and noise in order to soundproof the environment inside. Alternative embodiments wherein the work area 2 is marked out by protective barriers of another kind, e.g. metal mesh, photoelectric alarm systems or the like are not, however, to be excluded.

Near one wall of the cabin 3, there is a rotating base 4 which allows to introduce the pallets 5 supporting the parts P to be machined into the work area 2 and, at the same time, to remove the pallets themselves once the machining of the parts P has been completed.

Inside the work area 2 there is an articulated robotic arm 6 equipped with a free end which mounts gripping means 7, of the grippers type or the like, to grasp the parts P.

Inside the range of action R of the articulated robotic arm 6 there is a collection store 8 for the different types of grippers 7 that can be fitted onto the articulated robotic arm 6 in an automated manner.

Inside the work area 2 there is also a plurality of operating units 9a, 9b, 9c and 9d equipped with corresponding tools 10a, 10b, 10c and 10d for machining the parts P moved by the articulated robotic arm 6.

The operating units 9a, 9b, 9c and 9d in particular are installed on a manoeuvring machine 11 suitable for rotating the operating units 9a, 9b, 9c and 9d around a vertical rotation axis A and for positioning one of the operating units 9a, 9b, 9c and 9d alternately in a working position arranged close to the articulated robotic arm 6 for machining the part P, and the remaining operating units 9a, 9b, 9c and 9d in the same number of standby positions arranged substantially away from the articulated robotic arm 6.

Usefully, the aforementioned working position is arranged inside the range of action R of the articulated robotic arm 6, whereas the standby positions are outside it.

In more detail, the manoeuvring machine 11 comprises a base frame 12 which is fastened to the ground and onto which a support frame 13 of the operating units 9a, 9b, 9c and 9d is fitted so that it rotates around the rotation axis A.

The support frame 13 is composed, for example, of a horizontal platform which is centred in relation to the rotation axis A and which is equipped with a plurality of installation positions 14 where the operation units 9a, 9b, 9c and 9d can be installed.

In the particular embodiment of the invention shown in the figures, the platform 13 has four installation positions 14 which are arranged with two opposite the other two and staggered at substantially 90° in relation to the rotation axis A.

Advantageously, each operating unit 9a, 9b, 9c and 9d is provided with a modular element 15 for attaching to the platform 13, modular element meaning a structure with standardised shapes and dimensions and complementary to those of the installation positions 14.

The modular elements 15 of the operating units 9a, 9b, 9c and 9d can be connected to the platform 13 by simply inserting screws or other fastening systems.

The presence of the modular elements 15 makes the operating units 9a, 9b, 9c and 9d interchangeable with one another, making them easier to install, remove and replace with others depending on the type of machining to be carried out on the parts P.

In more detail, the tools 10a, 10b, 10c and 10d installed on the operating units 9a, 9b, 9c and 9d are different to each other for carrying out different types of machining.

A first operating unit 9a, e.g., is a milling machine equipped with mill 10a that rotates around a horizontal axis.

A second operating unit 9b carries a diamond cutting disc 10b.

A third operating unit 9c consists of a rotating drive spindle of a disc saw 10c.

A fourth operating unit 9d, lastly, consists of a grinding machine equipped with a horizontal-axis grinding wheel 10d.

In any case, additional operating units may be provided, such as taping machines or others, to be installed in the installation positions 14 should they be required by the type of machining to be carried out on the parts P.

The electric and pneumatic power for operating the operating units 9a, 9b, 9c and 9d is supplied via specially provided supply means 16, of the electric wiring type, connection tubes for the flow of compressed air etc., which are connected to the electrical and pneumatic systems of the station 1.

Usefully, the manoeuvring machine 11 has a containing element 17 for the supply means 16 which consists of a tubular body extending above the platform 13 in a vertical direction and coaxial to the rotation axis A.

Basically, the supply means 16 extend from the ceiling of the cabin 1, arrive at the manoeuvring machine 11 passing through the tubular body 17 and, once they are near the platform 13, connect to the operating units 9a, 9b, 9c and 9d.

Different embodiments to that in the present invention are also possible, however, in which, e.g., the tubular body 17 extends below the platform 13 and allows the supply means 16 to be connected to the electrical and pneumatic systems near the floor of the station 1.

Advantageously, the manoeuvring machine 11 has suction means of the dust produced during machining.

Such suction means comprise a suction duct 18 connected to the base frame 12 and provided with an intake manifold 19 of the dust which is located below the platform 13 near the working position of the operating units 9a, 9b, 9c and 9d.

Furthermore, collection and removal means 20 of the machining waste such as sprues or the like are arranged near the working position.

In particular, the collection and removal means 20 consist of a plate conveyor arranged on the ground, one ending part of which is located below the working position of the operating units 9a, 9b, 9c and 9d whereas the opposite ending part extends up to a collection bin 21 located near a pick-up door 22 on the walls of the cabin 3.

The operation of the present invention is illustrated schematically in the figures from 3a to 3d.

In fact, depending on the type of operation to be carried out on the part P being machined, the rotation of the platform 13 in relation to the base frame 12 allows all of the operating units 9a, 9b, 9c and 9d installed on the manoeuvring machine 11 to be located near the articulated robotic arm 6.

During the machining of the part P by the tools 10a, 10b, 10c and 10d, the operating units 9a, 9b, 9c and 9d can remain at a standstill or they can be rotated around the rotation axis A.

In fact, advantageously, the manoeuvring machine 11 is equipped with fine adjustment means of the rotation of the platform 13 and of the operating units 9a, 9b, 9c and 9d around the rotation axis A.

Such adjustment means, not shown in detail in the figures, are suitable for working together with the articulated robotic arm 6 during machining to determine the relative motion of the tools 10a, 1 0b, 10c and 10d and of the part P and, in other words, to define the tool's path as the interpolation of the motion of the articulated robotic arm 7 and of the manoeuvring machine 11.

It has in fact been seen how the described invention achieves the set objects.

The invention thus conceived is susceptible of numerous modifications and variations, all of which falling within the scope of the inventive concept.

Furthermore all the details may be replaced by other elements which are technically equivalent.

In practice, the contingent shapes and dimensions may be any according to requirements without because of this moving outside the protection scope of the following claims.

## Claims

1. Station (1) for mechanical machining of parts, particularly cast iron, aluminium castings or the like, comprising
at least one work area (2);
at least one articulated robotic arm (6) arranged inside said work area (2) and equipped with gripping means (7) of at least one part (P) to be machined;
a plurality of operating units (9a, 9b, 9c, 9d); and
at least one manoeuvring machine (11) of at least two of said operating units (9a, 9b, 9c, 9d) around a substantially vertical rotation axis (A),
wherein said manoeuvring machine (11) is arranged inside said work area (2) and is suitable for positioning alternately one of said operating units (9a, 9b, 9c, 9d) in a working position arranged close to said articulated robotic arm (6) for machining said part, and for positioning the other of said operating units (9a, 9b, 9c, 9d) in a standby position arranged substantially away from said articulated robotic arm,
wherein said manoeuvring machine (11) comprises a base frame (12) and at least one support frame (13) of said operating units (9a, 9b, 9c, 9d) which is fitted onto said base frame (12) so that it can rotate around said rotation axis (A), and **characterised in that** the operating units (9a-9d) are constituted by machines that are each equipped with corresponding tools (10a, 10b, 10c, 10d) for carrying out different types of machining of said part (P) moved by said articulated robotic arm (6), and
**in that** said manoeuvring machine (11) comprises fine adjustment means of the rotation of said support frame (13) around said rotation axis (A) that are suitable for working together with said articulated robotic arm (6) to determine the relative motion of said tools (10a, 10b, 10c, 10d) and of said part (P) during machining.

2. Station according to claim 1, **characterised in that** said working position is positioned inside the range of action of said articulated robotic arm (6).

3. Station according to claim. 1 or 2, **characterised in that** said standby position is positioned outside the range of action of said articulated robotic arm (6).

4. Station according to one of the preceding claims, **characterised in that** said manoeuvring machine (11) comprises at least two installation positions (14) of said operating units (9a, 9b, 9c, 9d).

5. Station according to claim 4, **characterised in that** said support frame comprises a substantially horizontal platform (13) equipped with said installation positions (14).

6. Station according to claim 4 or 5, **characterised in that** said operating units (9a, 9b, 9c, 9d) are each provided with a modular element (15) for attaching to said installation positions.

7. Station according to one of the claims 4 to 6, **characterised in that** said manoeuvring machine (11) comprises four of said installation positions arranged with two opposite the other two in relation to said rotation axis (A).

8. Station according to claim 7, **characterised in that** said four installation positions are substantially arranged staggered at 90 deg. in relation to said rotation axis (A).

9. Station according to one of the preceding claims, **characterised in that** at least one of said operating units (9a, 9b, 9c, 9d) is a milling machine.

10. Station according to one of the preceding claims, **characterised in that** at least one of said operating units (9a, 9b, 9c, 9d) is a grinding machine.

11. Station according to one of the preceding claims, **characterised in that** at least one of said operating units (9a, 9b, 9c, 9d) is a taping machine.

12. Station according to one of the preceding claims, **characterised in that** at least one of said operating units (9a, 9b, 9c, 9d) is provided with a disc saw.

13. Station according to one of the preceding claims, **characterised in that** at least one of said operating units (9a, 9b, 9c, 9d) is provided with a diamond cutting disc.

14. Station according to one of the preceding claims, **characterised in that** said work area (2) is at least partially marked out by a soundproof cabin (3).

15. Station according to one of the preceding claims, **characterised in that** said work area (2) is at least partially marked out by a protective barrier.

16. Station according to one of the preceding claims, **characterised in that** said manoeuvring machine (11) comprises suction means (18, 19) of the dust produced during machining.

17. Station according to claims 16, **characterised in that** said suction means comprise at least one suction duct (18) connected to said base frame (12) and provided with an intake manifold (19) of the dust which is located near said working position.

18. Station according to claim 17, **characterised in that** said manifold (19) is located below said support frame (13).

19. Station according to one of the preceding claims, **characterised in that** said manoeuvring machine (11) comprises at least one containing element (17) for the supply means (16) of said operating units (9a, 9b, 9c, 9d).

20. Station according to claim 19, **characterised in that** said containing element comprises a tubular body (17) arranged substantially vertical above said support frame (13).

21. Station according to claim 19, **characterised in that** said containing element comprises a tubular body (17) arranged substantially vertical below said support frame (13).

22. Station according to one of the claims 19 to 21, **characterised in that** said containing element (17) is substantially coaxial to said rotation axis (A).

23. Station (1) according to one of the preceding claims, **characterised in that** it comprises collection and removal means (20) of the machining waste that are at least partially located near said working position.

24. Station according to claim 23, **characterised in that** said collection and removal means (20) comprise at least one conveyor arranged at least in part below said working position.

## Patentansprüche

1. Station (1) zur mechanischen Bearbeitung von Teilen, besonders Gusseisen, Gussstücke aus Aluminium oder Ähnliches, die aufweist:
mindestens einen Arbeitsbereich (2);
mindestens einen gelenkigen Roboterarm (6), der innerhalb des Arbeitsbereichs (2) angeordnet und mit einer Greifeinrichtung (7) für das mindestens eine zu bearbeitende Teil zu ausgestattet ist;
eine Vielzahl von Betriebseinheiten (9a, 9b, 9c, 9d); und
mindestens eine Manövriermaschine (11) von mindestens zwei der Betriebseinheiten (9a, 9b, 9c, 9d) um eine im wesentlichen vertikale Rotationsachse (A),
bei der die Manövriermaschine (11) innerhalb des Arbeitsbereichs (2) angeordnet und für das abwechselnde Positionieren einer der Betriebseinheiten (9a, 9b, 9c, 9d) in einer Arbeitsposition nahe dem gelenkigen Roboterarm (6) zum Bearbeiten des Teils und für das Positionieren der anderen Betriebseinheiten (9a, 9b, 9c, 9d) in einer Bereitschaftsposition, die sich vom gelenkigen Roboterarm im Wesentlichen entfernt befindet, geeignet ist,
bei der die Manövriermaschine (11) einen Grundrahmen (12) und mindestens einen Halterahmen (13) für die Betriebseinheiten (9a , 9b, 9c, 9d) aufweist, der so auf dem Grundrahmen (12) angebracht ist, dass er um die Rotationsachse (A) drehen kann, und **dadurch gekennzeichnet, dass** die Betriebseinheiten (9a - 9d) durch Maschinen gebildet werden, die jeweils mit entsprechenden Werkzeugen (10a, 10b, 10c, 10d) zum Ausführen unterschiedlicher Arten der Bearbeitung des vom gelenkigen Roboterarm (6) bewegten Teils (P) ausgestattet sind, und **dadurch**, dass die Manövriermaschine (11) eine Einrichtung zum Feinjustieren der Rotation des Halterahmens (13) um die Rotationsachse (A) aufweist, die geeignet ist, mit dem gelenkigen Roboterarm (6) zusammenzuwirken, um die relative Bewegung der Werkzeuge (10a, 10b, 10c, 10d) und des Teils (P) während der Bearbeitung zu bestimmen.

2. Station gemäß Anspruch 1, **dadurch gekennzeichnet, dass** die Arbeitsposition sich innerhalb des Wirkungsbereichs des gelenkigen Roboterarm (6) befindet.

3. Station gemäß Anspruch 1 oder 2, **dadurch gekennzeichnet, dass** die Bereitschaftsposition sich außerhalb des Wirkungsbereichs des gelenkigen Roboterarms (6) befindet.

4. Station gemäß einem der vorangegangenen Ansprüche, **dadurch gekennzeichnet, dass** die Manövriermaschine (11) mindestens zwei Einbaupositionen (14) der Betriebseinheiten (9a, 9b, 9c, 9d) aufweist.

5. Station gemäß Anspruch 4, **dadurch gekennzeichnet, dass** der Halterahmen eine im Wesentlichen horizontale Plattform (13), die mit den Einbaupositionen (14) ausgestattet ist, aufweist.

6. Station gemäß Anspruch 4 oder 5, **dadurch gekennzeichnet, dass** jede der Betriebseinheiten (9a, 9b, 9c, 9d) mit einem modularen Element (15) zum Befestigen an den Einbaupositionen versehen ist.

7. Station gemäß einem der Ansprüche 4 bis 6, **dadurch gekennzeichnet, dass** die Manövriermaschine (11) vier dieser Einbaupositionen aufweist dergestalt, dass zwei in Bezug auf die Rotationsachse (A) gegenüber den zwei anderen angeordnet sind.

8. Station gemäß Anspruch 7, **dadurch gekennzeichnet, dass** die vier Einbaupositionen in Bezug auf die Rotationsachse (A) im Wesentlichen um 90 Grad versetzt angeordnet sind.

9. Station gemäß einem der vorangegangenen Ansprüche, **dadurch gekennzeichnet, dass** mindestens eine der Betriebseinheiten (9a, 9b, 9c, 9d) eine Fräsmaschine ist.

10. Station gemäß einem der vorangegangenen Ansprüche, **dadurch gekennzeichnet, dass** mindestens eine der Betriebseinheiten (9a, 9b, 9c, 9d) eine Schleifmaschine ist.

11. Station gemäß einem der vorangegangenen Ansprüche, **dadurch gekennzeichnet, dass** mindestens eine der Betriebseinheiten (9a, 9b, 9c, 9d) eine Gewindeschneidmaschine ist.

12. Station gemäß einem der vorangegangenen Ansprüche, **dadurch gekennzeichnet, dass** mindestens eine der Betriebseinheiten (9a, 9b, 9c, 9d) mit einer Scheibensäge versehen ist.

13. Station gemäß einem der vorangegangenen Ansprüche, **dadurch gekennzeichnet, dass** mindestens eine der Betriebseinheiten (9a, 9b, 9c, 9d) mit einer Diamanttrennscheibe versehen ist.

14. Station gemäß einem der vorangegangenen Ansprüche, **dadurch gekennzeichnet, dass** der Arbeitsbereich (2) mindestens teilweise durch eine schalldichte Kabine (3) abgegrenzt wird.

15. Station gemäß einem der vorangegangenen Ansprüche, **dadurch gekennzeichnet, dass** der Arbeitsbereich (2) mindestens teilweise durch eine Schutzbarriere abgegrenzt wird.

16. Station gemäß einem der vorangegangenen Ansprüche, **dadurch gekennzeichnet, dass** die Manövriermaschine (11) eine Absaugeinrichtung (18, 19) für den bei der Bearbeitung entstehenden Staub aufweist.

17. Station gemäß Anspruch 16, **dadurch gekennzeichnet, dass** die Absaugeinrichtung mindestens einen Absaugkanal (18) aufweist, der mit dem Grundrahmen (12) verbunden ist und mit einer nahe der Arbeitsposition angeordneten Ansaugsammelleitung (19) für den Staub versehen ist.

18. Station gemäß Anspruch 17, **dadurch gekennzeichnet, dass** die Sammelleitung (19) unterhalb des Halterahmens (13) angeordnet ist.

19. Station gemäß einem der vorangegangenen Ansprüche, **dadurch gekennzeichnet, dass** die Manövriermaschine (11) mindestens ein Aufnahmeelement (17) für die Versorgungseinrichtungen (16) der Betriebseinheiten (9a, 9b, 9c, 9d) aufweist.

20. Station gemäß Anspruch 19, **dadurch gekennzeichnet, dass** das Aufnahmeelement einen rohrförmigen Körper (17) aufweist, der im Wesentlichen vertikal über dem Halterahmen (13) angeordnet ist.

21. Station gemäß Anspruch 19, **dadurch gekennzeichnet, dass** das Aufnahmeelement einen rohrförmigen Körper (17) aufweist, der im Wesentlichen vertikal unter dem Halterahmen (13) angeordnet ist.

22. Station gemäß einem der Ansprüche 19 bis 21, **dadurch gekennzeichnet, dass** das Aufnahmeelement (17) im Wesentlichen koaxial mit der Rotationsachse (A) ist.

23. Station (1) gemäß einem der vorangegangenen Ansprüche, **dadurch gekennzeichnet, dass** sie eine mindestens teilweise nahe der Arbeitsposition angeordnete Sammel- und Abtransporteinrichtung (20) für die Bearbeitungsrückstände aufweist.

24. Station gemäß Anspruch 23, **dadurch gekennzeichnet, dass** die Sammel- und Abtransporteinrichtung (20) mindestens eine Förderanlage, die mindestens teilweise unter der Arbeitsposition angeordnet ist, aufweist.

## Revendications

1. Station pour l'usinage mécanique de pièces, en particulier fontes en fonte, fontes en aluminium ou similaire, comprenant
au moins une zone de travail (2) ;
au moins un bras articulé robotisé (6) à l'intérieur de ladite zone de travail (2) équipé de moyens de préhension (7) d'au moins une pièce (P) à usiner ;
une pluralité d'unités opérationnelles (9a, 9b, 9c, 9d) ;
et au moins une machine de manoeuvre (11) d'au moins deux desdites unités opérationnelles (9a, 9b, 9c, 9d) autour d'un axe de rotation (A) sensiblement vertical,
où ladite machine de manoeuvre (11) est disposée à l'intérieur de ladite zone de travail (2) et est apte à positionner alternativement une desdites unités opérationnelles (9a, 9b, 9c, 9d) dans une position de travail disposée à proximité dudit bras articulé robotisé (6) pour l'usinage de ladite pièce, et à positionner l'autre desdites unités opérationnelles (9a, 9b, 9c, 9d) dans une position de stand-by sensiblement distancée par rapport audit bras articulé robotisé,
où ladite machine de manoeuvre (11) comprend un cadre de base (12) et au moins une cadre de support (13) desdites unités opérationnelles (9a, 9b, 9c, 9d) qui est installé sur ledit cadre de base (12) de façon qu'il puisse tourner autour dudit axe de rotation (A) et **caractérisé en ce que** les unités opérationnelles (9a, 9b, 9c, 9d) sont constituées par des machines qui sont équipées chacune avec des outils (10a, 10b, 10c, 10d) correspondants pour la réalisation de différents types d'usinage de ladite pièce (P) mouvementée par le bras articulé robotisé (6) et **en ce que** ladite machine de manoeuvre (11) comprend des moyens de réglage fin de la rotation dudit cadre de support (13) autour dudit axe de rotation (A) aptes à travailler ensemble avec ledit bras articulé robotisé (6) pour déterminer le mouvement relatif desdits outils (10a, 10b, 10c, 10d) et de ladite pièce (P) pendant l'usinage.

2. Station selon la revendication 1, **caractérisée en ce que** ladite position de travail est placée à l'intérieur du rayon d'action dudit bras articulé robotisé (6).

3. Station selon les revendications 1 ou 2, **caractérisée en ce que** ladite position de stand-by est positionnée à l'extérieur du rayon d'action dudit bras articulé robotisé (6).

4. Station selon une des revendications précédentes, **caractérisée en ce que** ladite machine de manoeuvre (11) comprend au moins deux positions d'installation (14) desdites unités opérationnelles (9a, 9b, 9c, 9d).

5. Station selon la revendication 4, **caractérisée en ce que** ledit cadre de support comprend une plate-forme (13) sensiblement horizontale pourvus desdites positions d'installation (14).

6. Station selon la revendication 4 ou 5, **caractérisée en ce que** lesdites unités opérationnelles (9a, 9b, 9c, 9d) sont fournies chacune avec un élément modulaire (15) pour la fixation avec lesdites positions d'installation.

7. Station selon une des revendications de la 4 à la, 6, **caractérisée en ce que** ladite machine de manoeuvre (11) comprend quatre desdites positions d'installation disposées en opposition deux par deux par rapport audit axe de rotation (A).

8. Station selon la revendication 7, **caractérisée en ce que** lesdites quatre positions d'installation sont sensiblement disposées décalées de 90 degrés par rapport audit axe de rotation (A).

9. Station selon une des revendications précédentes, **caractérisée en ce qu'**au moins une desdites unités opérationnelles (9a, 9b, 9c, 9d) est une fraiseuse.

10. Station selon une des revendications précédentes, **caractérisée en ce qu'**au moins une desdites unités opérationnelles (9a, 9b, 9c, 9d) est une machine de moulage.

11. Station selon une des revendications précédentes, **caractérisée en ce qu'**au moins une desdites unités opérationnelles (9a, 9b, 9c, 9d) est une machine à coller.

12. Station selon une des revendications précédentes, **caractérisée en ce qu'**au moins une desdites unités opérationnelles (9a, 9b, 9c, 9d) est fourni avec un disque de scie.

13. Station selon une des revendications précédentes, **caractérisée en ce qu'**au moins une desdites unités opérationnelles (9a, 9b, 9c, 9d) est fourni avec un disque diamanté de découpe.

14. Station selon une des revendications précédentes, **caractérisée en ce que** ladite zone de travail (2) est au moins partiellement délimitée par une cabine insonorisée (3).

15. Station selon une des revendications précédentes, **caractérisée en ce que** ladite zone de travail (2) est au moins partiellement délimitée par une barrière de protection.

16. Station selon une des revendications précédentes, **caractérisée en ce que** ladite machine de manoeuvre (11) comprend des moyens d'aspiration (18, 19) des poussières produites pendant l'usinage.

17. Station selon la revendication 16, **caractérisée en ce que** lesdits moyens d'aspiration comprennent au moins un conduit d'aspiration (18) relié audit cadre de base (12) et pourvu d'un collecteur d'entrée (19) de la poussière qui se trouve à proximité de ladite position de travail.

18. Station selon la revendication 17, **caractérisée en ce que** ledit collecteur (19) est situé en dessous dudit cadre de support (13).

19. Station selon une des revendications précédentes, **caractérisée en ce que** ladite machine de manoeuvre (11) comprend au moins un élément de retenue (17) pour des moyens d'alimentation (16) desdites unités opérationnelles (9a, 9b, 9c, 9d).

20. Station selon la revendication 19, **caractérisée en ce que** ledit élément de retenue comprend un corps tubulaire (17) disposé sensiblement vertical au-dessus dudit cadre de support (13).

21. Station selon la revendication 19, **caractérisée en ce que** ledit élément de retenue (17) comprend un corps tubulaire (17) disposé sensiblement vertical au-dessous dudit cadre de support (13).

22. Station selon une des revendications de la 19 la 21, **caractérisée en ce que** ledit élément de retenue (17) est sensiblement coaxiale audit axe de rotation (A).

23. Station (1) selon une des revendications précédentes, **caractérisée en ce qu'**elle comprend des moyens de collecte et d'éloignement (20) des déchets d'usinage qui sont au moins partiellement situés à proximité de ladite position de travail.

24. Station selon la revendication 23, **caractérisée en ce que** lesdits moyens de collecte et d'éloignement (20) comprennent au moins un convoyeur disposé au moins partiellement en dessous de ladite position de travail.
